# EUROPEAN PATENT SPECIFICATION

(11) **EP 2 824 932 B1**
(45) Date of publication and mention of the grant of the patent: **05.10.2016**
(21) Application number: 14187510.4
(22) Date of filing: 24.12.2008
(51) Int. Cl.: H04N 21/235, H04N 21/236, H04N 21/2381, H04N 21/434, H04N 21/435, H04N 21/4363, H04N 21/438, H04N 21/45, H04N 21/454, H04N 21/643, H04N 21/6437

(54) **Method and apparatus for processing service guide information**
Verfahren und Vorrichtung zur Verarbeitung von Dienstführerinformationen
Procédé et appareil pour le traitement d'informations d'un guide de services

(30) Priority: 26.12.2007 KR 20070137437
(43) Date of publication of application: 14.01.2015
(62) Divisional of application: 08172928.7
(73) Proprietor: LG ELECTRONICS INC., Yeongdeungpo-Gu Seoul 150-721 (KR)
(72) Inventor: Moon, Kyoung Soo, 137-724 SEOUL (KR); Choi, Jin Young, Seoul 135-860 (KR)
(74) Representative: Cabinet Plasseraud

(56) References cited:
- EP-A2- 1 753 166
- WO-A2-2007/042886
- US-A1- 2007 045 416
- "Digital Video Broadcasting (DVB); IP Datacast over DVB-H: Electronic Service Guide (ESG) European B roadcasting U nion U nion E uropéenne de R adio-Télévision EB UÜER; ETSI TS 102 471", 96. MPEG MEETING;21-3-2011 - 25-3-2011; GENEVA; (MOTION PICTURE EXPERTGROUP OR ISO/IEC JTC1/SC29/WG11), LIS, SOPHIA ANTIPOLIS CEDEX, FRANCE, vol. BC, no. V1.2.1, 1 November 2006 (2006-11-01), XP014039808, ISSN: 0000-0001
- OPEN MOBILE ALLIANCE: "Service Guide for Mobile Broadcast Services", OMA-TS-BCAST_SERVICEGUIDE-V1_0-20070925-C , no. Candidate Version 1.0 26 September 2007 (2007-09-26), pages 1-203, XP002641545, Retrieved from the Internet: URL:http://member.openmobilealliance.org/f tp/Public_documents/bcast/Perma nent_documents/OMA-TS-BCAST_Service_Guide- V1_0-20070925-C.zip [retrieved on 2011-06-10]
- PAILA R WALSH NOKIA M LUBY DIGITAL FOUNTAIN R LEHTONEN TELIASONERA V ROCA INRIA RHONE-ALPES T: "FLUTE - File Delivery over Unidirectional Transport; draft-ietf-rmt-flute-revised-05.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, vol. rmt, no. 5, 26 October 2007 (2007-10-26), XP015053803, ISSN: 0000-0004

## Description

The present invention relates to a method and apparatus for processing data, and more particularly, to a method and apparatus for processing service guide information through a broadcast channel and an interactive channel.

A content refers to data content or information including image, sound, and text that are provided to users through wired and/or wireless communication. Recent data contents are created by using digital method in order to be provided through various broadcast channels and interactive channels. For example, a user may download through an interactive channel, such as the Internet, a previously viewed data content provided via broadcasting and view the downloaded data content. As broadcast systems and communication systems are being integrated, a solution for providing users with the same data content from a broadcast system and a communication system is now being taken into consideration. More specifically, a solution enabling a terminal to access data content via a broadcast channel and an interactive channel is now being developed.
EP1753166 discloses a broadcast system for providing access information of a broadcast service. A receiver receives access information of the broadcast service, analyses the information and from this determines a network from which the service is provided.

Accordingly, the present invention is directed to a method and apparatus for processing service guide information that substantially obviate one or more problems due to limitations and disadvantages of the related art.

An object of the present invention is to provide a method and apparatus for processing service guide information that can efficiently acquire service guide information.

Another object of the present invention is to provide a method and apparatus for processing service guide information that can enable only the desired contents to be received based upon the function of a terminal, when the terminal receives the service guide information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for transmitting service guide information according to claim 1 is provided.

The access information includes a content format defined by a mimeType.

The access information may be included in an element providing link information, the element belonging to an access fragment of the service guide information, and the link information enables access to a content that is received through an interactive channel.

In another aspect of the present invention, a apparatus for transmitting service guide information according to claim 4 is provided.

Furthermore, the control unit may include an internet protocol (IP) decapsulator, a user datagram protocol (UDP), a file delivery over unidirectional transport protocol (FLUTE) decoder, and a parser. The IP decapsulator decapsulates an IP datagram delivering the service guide information including the access information. The UDP decoder decodes the decapsulated data based upon the UDP. The FLUTE decoder decodes the UDP-decoded data based upon the FLUTE. And, the parser parses the FLUTE-decoded data.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates an exemplary structure of service guide information based upon an XML format;
FIG. 2 illustrates an exemplary structure of an access type element;
FIG. 3 illustrates a detailed view of an exemplary structure of an AccessServerURL element from the structure shown in FIG. 2;
FIG. 4 illustrates an AccessServerURL element of the service guide information in the form of an XML schema;
FIG. 5 illustrates a transmitting system transmitting service guide information according to an embodiment of the present invention;
FIG. 6 illustrates a modulator/encoder;
FIG. 7 illustrates an exemplary signal positioning based upon a frame created by a frame generator;
FIG. 8 illustrates an example of broadcast program, contents, and data being transmitted through a channel;
FIG. 9 and FIG. 10 respectively illustrate receiving systems receiving service guide information according to the present invention;
FIG. 11 illustrates an example of service guide information or a protocol stack to which service guide information is transmitted; and
FIG. 12 illustrates a method for processing service guide information according to an embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

Hereinafter, the service guide information will indicate information associated with a service or data content provided by a service and content provider. The service guide information includes information for describing, accessing, and purchasing the service or data content provided by the service and content provider. The service guide information may be transmitted (or delivered) to a terminal owned by the user through a broadcast channel or an interactive channel. The interactive channel indicates a channel through which two-way communication is performed, and the broadcast channel indicates a one-way communication channel that does not designate a user in a multicast. For the user, the service guide information may correspond to entry information that is provided with a service or data content.

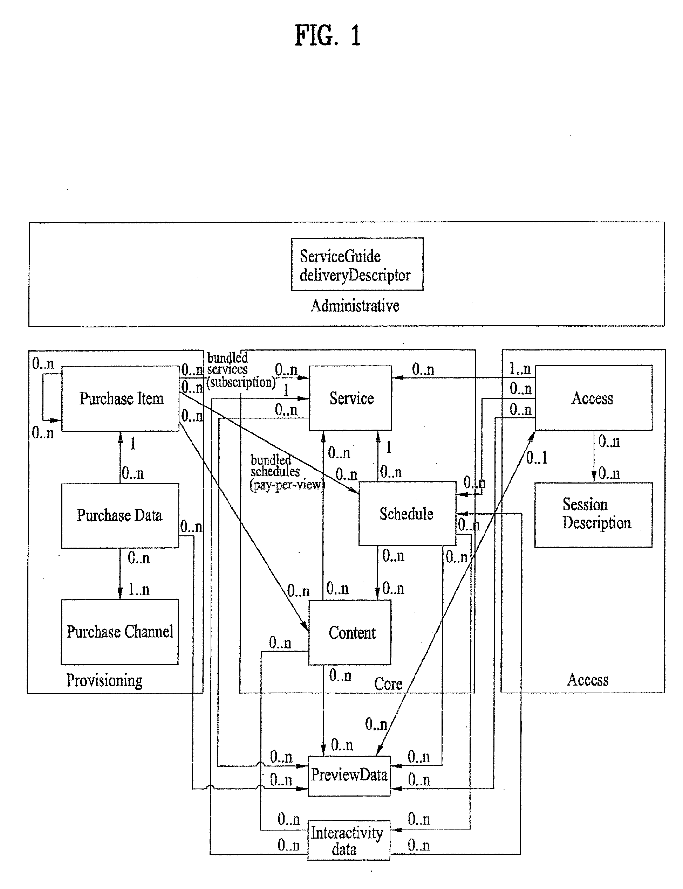

FIG. 1 illustrates an exemplary structure of service guide information. The exemplary service guide information will now be described in detail with reference to FIG. 1. The service guide information may include 4 types of structure information as shown in FIG. 1. Each structure information may include information of a lower level. Hereinafter, the lower level will be referred to as a fragment level. The arrows shown in FIG. 1 respectively indicate reference directions between each information. For example, when an arrow points from fragment A to fragment B, this indicates that fragment A refers to fragment B. More specifically, referring to FIG. 1, an access fragment refers to a service fragment. And, the numbers marked on the arrows corresponding to each fragment represent the number of reference information, which may be referred to by a respective fragment. Herein, the numbers "0, ..., n" indicate that 0 to *n* number of reference information exist (wherein *n* is an integer). Furthermore, "1, ..." indicates that at least one or more reference information exist.

Referring to FIG. 1, an administrative structure information may include a descriptor (hereinafter referred to as the service guide delivery descriptor (SGDD)), which describes transmission (or delivery) information that nay be delivered to a terminal. Accordingly, the terminal may be able to swiftly acquire a grouped fragment or metadata from the descriptor information.

A provisioning structure information includes each of a PurchaseItem fragment, a PurchaseData fragment, and a PurchaseChannel fragment. The referential relation between the fragments included in the provisioning structure information is illustrated in FIG. 1.

The PurchaseItem fragment includes information on a service bundle, which corresponds to more than one service, on the purchase of one or more content item, on free-of-charge supply, and on a subscription request. The PurchaseData fragment includes price information on the corresponding purchase item. The PurchaseChannel fragment may include information on an accessing entity with respect to one or more service content item.

A core structure information may include a service fragment, a schedule fragment, and a content fragment. The service fragment may correspond to an information unit describing a content item. The schedule fragment may correspond to an information unit having the schedule of a content item defined therein, the schedule of the content item corresponding to a time frame during which the content item can be used. The content fragment corresponds to an information unit including detailed information on each content.

An access structure information may include an access fragment and a session description fragment. Herein, the access fragment corresponds to an information unit including information on how a service can be accessed. And, the session description fragment corresponds to an information unit providing session information for accessing a service or content item.

Finally, the service guide information may include a PreviewData fragment and an InteractivityData fragment. The PreviewData fragment corresponds to an information unit including information that can display an abstract of the service or content to the user. And, the InteractivityData fragment corresponds to an information unit including information that is used to provide an interactive service to the user.

The service guide information provides information on usable services to the user. When the user selects a service based upon the service guide information received by the terminal, the terminal may select a flow that can receive a service or content. Detailed individual information on the service guide information delivered to the terminal may be transmitted (or delivered) by constant data units. Hereinafter, the transmission data unit (or transmission unit) will be referred to as a service guide delivery unit (SGDU). Therefore, each of the above-described fragment information may be divided and transmitted to each of the one or multiple service guide delivery units. The terminal first receives a descriptor including the transmission information of the service guide information (*e.g.,* a service guide delivery descriptor (SGDD)).

The terminal may receive a descriptor including the transmission information of the service guide information through a first channel. Hereinafter, the first channel through which the terminal receives the descriptor including the transmission information of the service guide information will be referred to as an announcement channel, for simplicity.

The service guide delivery descriptor (SGDD) includes entry information that can obtain a service guide delivery unit, which is the transmission data unit of the service guide information. The terminal may either use the entry information so as to receive a service guide delivery unit, which is the detailed data of the service guide information, through a second channel, or access the second channel so as to receive the data configuring the service guide information. Hereinafter, the second channel through which the terminal receives the data configuring the service guide information will be referred to as a delivery channel, for simplicity. In the description of the present invention, the terms "announcement channel" and "delivery channel" will be used for the purpose of conceptually differentiating the channel through which the service guide delivery descriptor (SGDD) is transmitted from the channel through which the service guide delivery unit (SGDU).

The terminal may obtain transmission information (*e.g.,* SGDD) of the service guide information from a broadcast channel or an interactive channel. A bearer bearing the above-described service guide delivery descriptor (SGDD) may vary depending upon the broadcast and communication system. The terminal may receive and access a service and content from one or more service guide delivery descriptors.

As described above, in the service guide information, the Access fragment includes information for accessing a service or schedule or protection information for the service or content. The Access fragment includes a plurality of elements, among which the AccessType element defines the Access type accessing a corresponding data content.

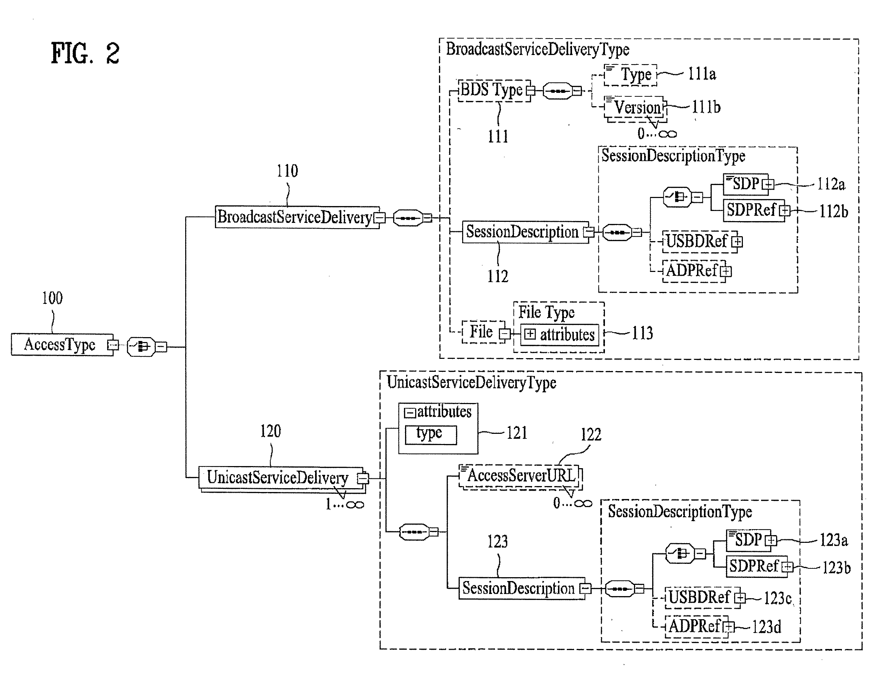

FIG. 2 illustrates an exemplary structure of an AccessType element. The AccessType element 100 includes at least one of the BroadcastServiceDelivery element 110 and the UnicastServiceDelivery element 120. Herein, the BroadcastServiceDelivery element 110 indicates that an object that is to be accessed may be transmitted through a broadcast network. And, when data content is transmitted through the interactive channel, the UnicastServiceDelivery element 120 indicates which server or which protocol is used for the transmission of the data content.

The BroadcastServiceDelivery element 110 includes a BDSType element 111, a SessionDescription element 112, and a FileDescription element 113. The BDSType element 111 carries a type 111a designating a broadcast distribution system (BDS). Herein, the type 111a may designate broadcast or communication systems, such as an IP datacast over digital video broadcasting-handheld (IPDC over DVB-H) system, a 3^{rd} generation partnership project multimedia broadcast/multimedia service (3GPP MBMS) system, and a 3GPPP2 broadcast multicast service (3GPP2 BCMCS) system. Further, the BDSType element 111 may also include version 111b information of each type 111a.

The SessionDescription element 112 information describing the session used by the terminal for accessing a data content or reference information. The SessionDescription element 112 may include an SDP element 112a, an SDPRef element 112b, a USBDRef element 112c, and an ADPRef element 112d. The SDP element 112a describes a session corresponding to the SDP format [RFC 4566], and the SDPRef element 112b may include reference information on the session description corresponding to the SDP format [RFC 4566]. Each of the USBDRef element 112c and the ADPRef element 112d respectively includes separately determined session description information. (Herein, USBDRef indicates a protocol referred to as a user service bundle description, and ADPRef indicates a protocol referred to as an AssociateDeliveryProcedure for file and stream distribution.) Furthermore, the FileDescription element 113 may be used for describing file metadata of a file transmission session.

Conversely, the UnicastServiceDelivery element 120 includes an attribute that may be referred to as a type 121. The type 121 is used for defining a transmission mechanism, which is used for accessing data contents. Mechanisms such as hypertext transfer protocol (HTTP), wireless application protocol (WAP) 1.0, WAP 2.X, real-time streaming protocol (RTSP), file delivery over unidirectional transport (FLUTE) over unicast, and so on, may be defined based upon a type 121 value.

The UnicastServiceDelivery element 120 includes an AccessServerURL element 122, a SessionDescription element 123, and a ServiceAccessNotificationURL element (not shown). The AccessServerURL element 122 includes service link information (*i.e.,* service link URL), which the terminal may be provided with (or serviced) through a network capable of two-way communication. For example, the AccessServerURL element 122 may include an HTTP URL, which point to a downloadable content, or an RTSP URL, which points to a streaming server for starting a streaming session. The SessionDescription element 123 of the UnicastServiceDelivery element 120 is identical to the SessionDescription element 112 of the BroadcastServiceDelivery element 110. Therefore, a detailed description of the same will be omitted for simplicity.

However, when the terminal receives a content based upon an Access type of the UnicastServiceDelivery element 120, the terminal cannot know whether or not the content that is to be received in displayable on the corresponding terminal. When the terminal downloads a content using the Access type, and when the corresponding content is non-supportable by the terminal or non-displayable on the terminal, the terminal may waste time and resources associated with the downloading process. Hereinafter, an example of selectively accessing a content displayable by the terminal according to an embodiment of the present invention, when the terminal downloads data content, will now be described in detail.

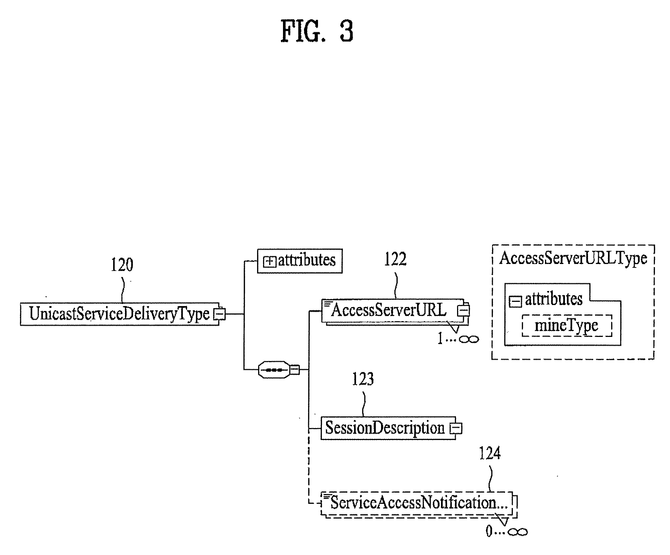

FIG. 3 illustrates a detailed view of an exemplary structure of an AccessServerURL element from the structure shown in FIG. 2. The AccessServerURL element 122 may have an attribute of a mimeType. When the AccessServerURL element 122 has the mimeType attribute, the terminal may access a content diversely defined by the mimeType in the AccessServerURL element 122, among the Access fragments of the service guide information, thereby downloading the accessed content.

For example, when the attribute of the AccessServerURL element is defined by the mimeType including contents, such as video/mpeg. image/gif, text/xml, based upon the attribute of the AccessServerURL element among diverse link information (*i.e.,* link information on a position where the corresponding content is located), the terminal may download the desired content from the link information. Herein, the link information corresponds to the position from which the content is provided, and the content is supported by the terminal. If the terminal cannot support the display the MPEG-format video document, the terminal may access position information providing various data formats, such as image/gif and text/xml, so as to download only the executable contents. Accordingly, when receiving the service guide information including the Access fragment, which defines the accessible content as the mimeType, data contents may be selectively received based upon the access information.

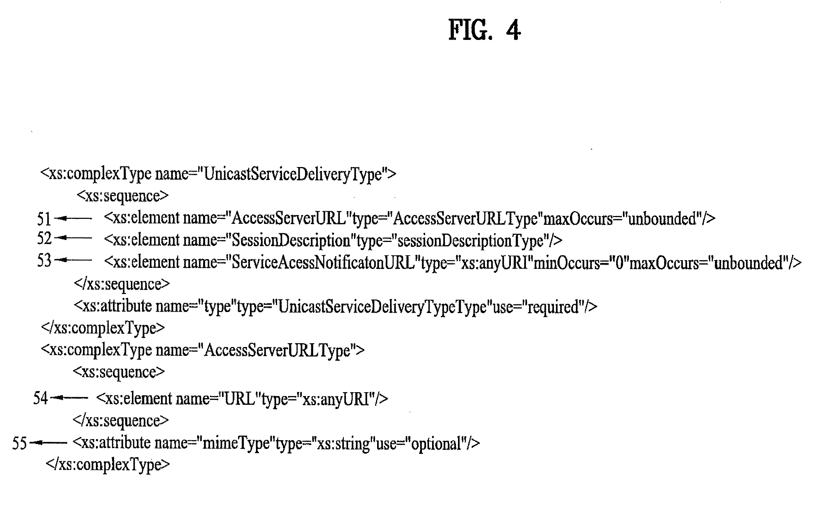

FIG. 4 illustrates an AccessServerURL element of the service guide information in the form of an XML schema. AS shown in FIG. 2, the UnicastServiceDelivery element may include an AccessServerURL element 51, a SessionDescription element 52, and a ServiceAccessNotificationURL 53. Herein, the AccessServerURL element 51 may include information describing a position, type, and format of a data content. For example, the AccessServerURL element 51 may have an element indicating a link information (URL) as the position information, and may also have an attribute 55 defined as the mimeType. Therefore, when the terminal receives the service guide information including such information, the terminal may download data contents from specific access information among diverse access information that can be accessed based upon the content type and format, which are defined by the mimeType.

A digital broadcast system transmitting and receiving the above-described service guide information will now be described in detail. As described above, the system may refer to a service guide delivery descriptor (SGDD), which is received by a terminal, so as to receive the service guide delivery descriptor or the service guide information. Herein, various types of systems may be used as the bearer bearing (or delivering) the service guide information. In the description of the present invention, a broadcast system will be proposed as the bearer of the service guide information. Accordingly, this is to facilitate the understanding of the delivery process, even when the process is used in a different embodiment to transmit (or deliver) service guide information and the respective service guide delivery descriptor of a different broadcast and/or communication system.

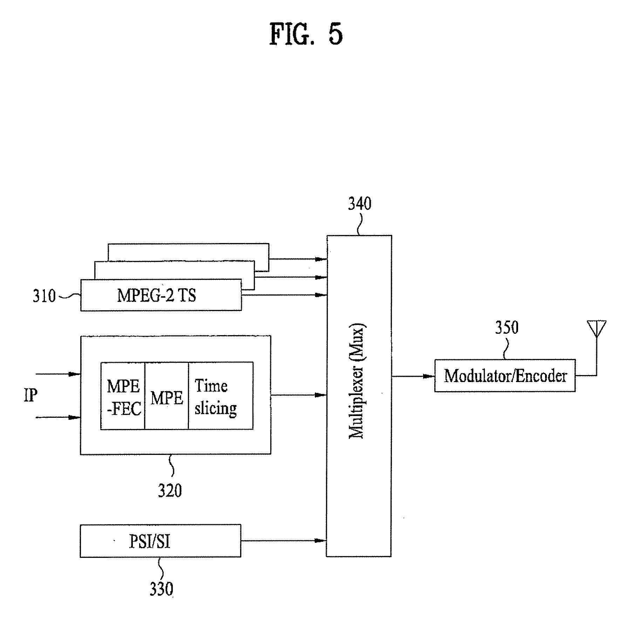

FIG. 5 illustrates a transmitting system transmitting service information according to an embodiment of the present invention. A transmitting system for transmitting service guide information according to an embodiment of the present invention will be described with reference to FIG. 5. In the example shown in FIG. 5, it is assumed that the service guide information is transmitted (or delivered) through a broadcast signal.

The digital broadcast transmitting system shown in FIG. 5 includes an encoding unit 310, 320, and 330, a multiplexer 340, and a modulator/encoder 350. The encoding unit includes a first encoder 310, a second encoder 320, and a third encoder 330. The first encoder 310 may encode audio, video, and data contents (*e.g.,* MPEG-2 transport streams) based upon a transmission/reception protocol.

The second encoder 320 may encode data including service guide information in an IP datagram format. The IP datagram refers to a signal processing format sending a signal to an internet protocol (IP) packet. Herein, the IP datagram includes a header including an IP address, and a data container transmitting information. In the packet-unit IP datagram, the data container may include video data, audio data, and service guide information data. More specifically, the example shown in FIG. 5 may perform an internet protocol (IP) datacasting method in order to transmit data. Herein, the IP datacasting method divides and compresses a video signal, an audio signal, and a data signal in packet units, thereby outputting the compressed data. The IP data are encapsulated by multi-protocol encapsulation (MPE), thereby being embedded to the MPEG-2 transport stream (TS). Herein, forward error correction (FEC) may be added to the MPE method, so as to process data with multi-protocol encapsulation-forward error correction (MPE-FEC). By positioning a transmission signal processed with MPE-FEC, a carrier-to-noise (CN) ratio of the transmission signal may be enhanced. MPE-FEC data including FEC or MPE data not including FEC may be included in the IP datagram format transmission data.

The second encoder 320 may encode the service guide information to an IP datagram format. The second encoder 320 may encapsulate the IP datagram included in the service guide information to MPE and then multiplex the processed data using a time-slicing method, so as to reduce power consumption. The multiplexed signal is converted to a transport stream, thereby being multiplexed with an MPEG-2 TS packet, which carries a video or audio signal. The service guide information may be divided into service guide delivery units (SGDUs). The service guide information may include an access fragment describing an access point of a content. The access fragment may have a position, type and format of the content capable of being downloaded. Herein as an example of this information, access information of mimetype attribute is disclosed in figs. 3 and 4. Therefore, the terminal can access to a server, in which provides the content supportable by the terminal by using access information having mimetype attribute of the access fragment of the service guide information.

The third encoder 330 may encode packets encoded by the first encoder 310 or the second encoder 320 (*e.g.,* multiplexing information of stream packets associated with a program or service). The multiplexing information includes table information on program specific information/service information (PSI/SI). The table information encoded by the third encoder 330 may include packet identification (PID) including the IP datagram being encoded by the second encoder 320 and IP/MAC notification table (INT) having mapping information of an IP address. The third encoder 330 may encode INT information, which can acquire transmission information of the service guide information (or service guide delivery descriptor (SGDD)). Accordingly, the terminal can obtain a service or content by receiving and using the service guide information as entry information.

The multiplexer 340 multiplexes each of the transport packets outputted from the first encoder 310, the second encoder 320, and the third encoder 330, thereby outputting the multiplexed data. Finally, the modulator/encoder 350 modulates and encodes the multiplexed signal. When the multiplexer 340 multiplexes the packet data encoded by the first encoder 310, the second encoder 320, and the third encoder 330 and outputs the multiplexed packet data, the modulator/encoder 350 modulates the multiplexed signal and encodes the modulated signal. Thereafter, the modulator/encoder 350 may transmit the modulated signal as a radio frequency (RF) signal. The modulator/encoder 350 may adopt various modulation and encoding methods in accordance with a wide range of broadcast systems. For example, ATSC type or ISDM-T type transmission methods may be used based upon DMB-type, DVB-H type, and VSB-type modulation methods.

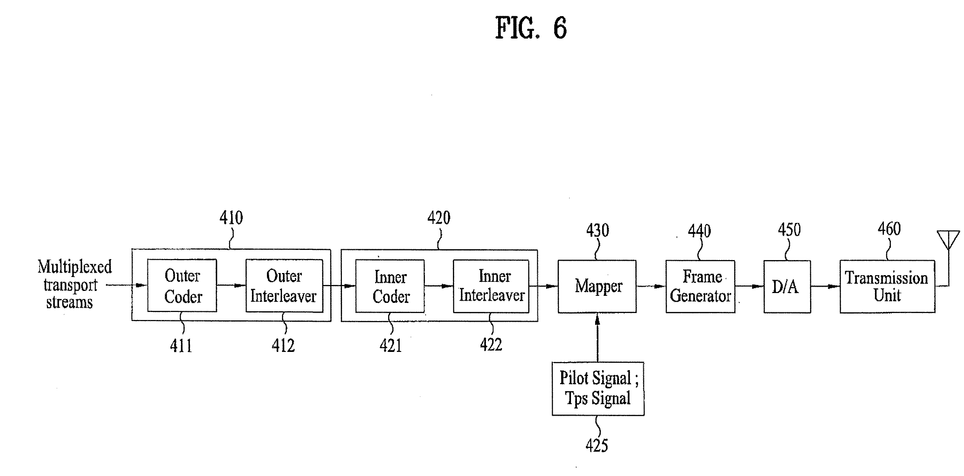

FIG. 6 illustrates a modulator/encoder shown in FIG. 5. Referring to FIG. 6, the modulator/encoder of FIG. 5 may use modulation and encoding methods, such as a digital video broadcasting-terrestrial/handheld (DVB-T/H) method.

A first encoder 410 includes an outer coder 411 and an outer interleaver 412. In order to enhance the transmission performance for transmitting the multiplexed signal, the first encoder 410 may encode and interleave each set of the multiplexed data. For example, the first encoder 410 may use a Reed-Solomon (RS) coding method for the outer coding process and a convolutional interleaving method for the interleaving process.

A second encoder 420 includes an inner coder 421 and an inner interleaver 422. The inner coder 421 and the inner interleaver 422 performs coding and interleaving processes once again on the signal that is to be transmitted, as preparation for any possible occurrence of errors in the transmission signal. The inner coder 421 may encode the transmission signal in accordance with a punctured convolution code. And, for the interleaving method, the inner interleaver 422 may adopt a native or in-depth interleaving method in accordance with the use of a memory in a 2k, 4k, and 8k transmission mode.

A mapper 430 takes into consideration a pilot signal, generated based upon the transmission mode, and a transmission parameter signal (TPS), which are generated by a system signal generator 425, thereby mapping the transmission signal in accordance with a 16QAM mode, a 64QAM mode, and a QPSK mode.

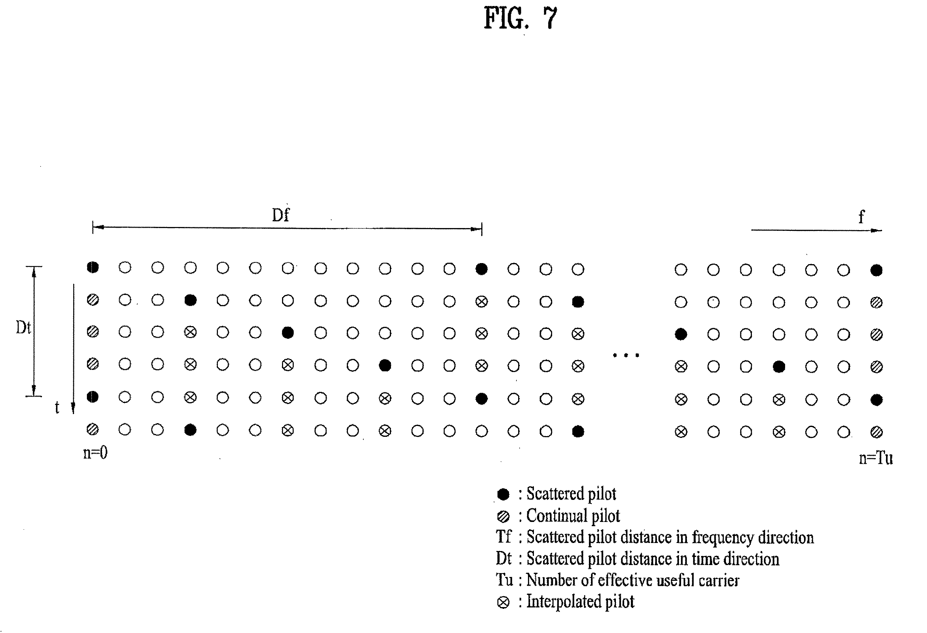

A frame generator 440 aligns (or positions) the mapped signal to a frame, thereby modulating the frame using an orthogonal frequency division multiplexing (OFDM) method. The frame generator 440 generates a frame having a protection section inserted in a data section, which includes the modulated signal. Each frame includes 68 OFDM symbols, and 4 frames may be grouped to form a super frame. For example, when the transmission mode is 8k, one symbol includes 6817 carriers. And, when the transmission mode is 2k, one symbol includes 1705 carriers. The protection section corresponds to a cyclic continuation copying the data of the data section. Herein, the length of the protection section may vary depending upon the transmission mode. Each of the OFDM frames includes a scattered pilot signal, a continual pilot signal, and a TPS carrier. An example of a signal frame generated by the frame generator of FIG. 6 will be described with reference to FIG. 7.

A digital-to-analog converter 450 converts the digital type broadcast signal, which includes a protection section and a data section, to an analog signal. And, a transmitting unit 460 may transmit the analog signal converted by the digital-to-analog converter 450 as an RF signal. Therefore, the encoded service guide information may be transmitted in accordance with the example shown in the transmitting system of FIG. 6.

FIG. 7 illustrates an exemplary signal positioning based upon a frame created by a frame generator shown in FIG. 6. Referring to FIG. 7, *Tu* indicates the number of effective useful carrier wave frequencies, Dt represents a distance between scattered pilots within the time axis (or direction), and *Df* indicates a distance between scattered pilots within a frequency axis (or direction). In the frequency domain, the distance between the scattered pilots (*Df*) decides a delay range of an estimatable ghost. FIG. 7 indicates the signal generated from the frame generator to a position of a pilot that is to be interpolated.

Therefore, when receiving a signal positioned as described above, time interpolation is performed at the pilot position, thereby positioning the symbol so that a pilot pattern is formed at a cycle of 4 inputted symbols. More specifically, by positioning the same scattered pilot signal in an initially inputted symbol point (t=1) and a symbol inputted at a point where t=5, the terminal receiving the signal may perform time interpolation from the position of the scattered pilot signal on symbol received at points t=2, 3, and 4. Additionally, since the symbol inputted at t=6 has the same scattered pilot pattern as the symbol inputted at t=2, the terminal receiving the signal may perform time interpolation of signals of t=3, 4, and 5, within a scattered pilot position of the symbol inputted at t=6 and the symbol inputted at t=2.

Furthermore, during signal reception, when time interpolation is performed after a symbol is received at t=7 using the above described method, scattered pilot signals are positioned at each 4 subcarrier wave positions for the symbol inputted at t=4. Therefore, the distance between the scattered pilot signals in the frequency domain of the symbol inputted at t=7 is reduced to 1/4 of the distance between the initial scattered pilot signals. And, the symbol inputted at t=4 is set-up to have a pattern positioning the scattered pilot signals for each set of 4 sub-carriers. Accordingly, the terminal receiving the signals may be able to process the signals just like when a larger number of pilot signals is positioned in a symbol. Therefore, when the continual pilot signal and the scattered pilot signal are used to transmit a signal, a channel may be adaptively compensated based upon a receiving channel status during signal reception.

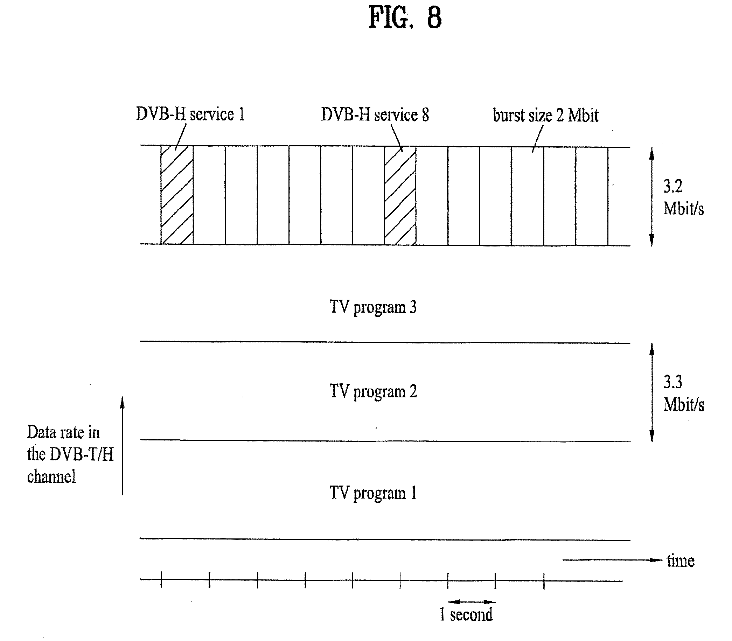

FIG. 8 illustrates an example of broadcast program, contents, and data being transmitted through a channel. In the transmission system shown in FIG. 5 and FIG. 6, a time-slicing method is adopted in a DVB-H system, thereby enabling a service that can be transmitted through a common channel of the DVB-T and DVB-H systems to be transmitted. A program may be transmitted depending upon the channel corresponding to each of the DVB-T system and the DVB-H system. And, when using the DVB-H system, each service may be time-division multiplexed using the time-slicing method and, then, transmitted. Data content including video/audio data and service guide information are included in an IP datagram of the DVB-H system so as to be converted to MPE or MPE-FEC, thereby being transmitted as an MPEG2-TS embedded with MPE or MPE-FEC.

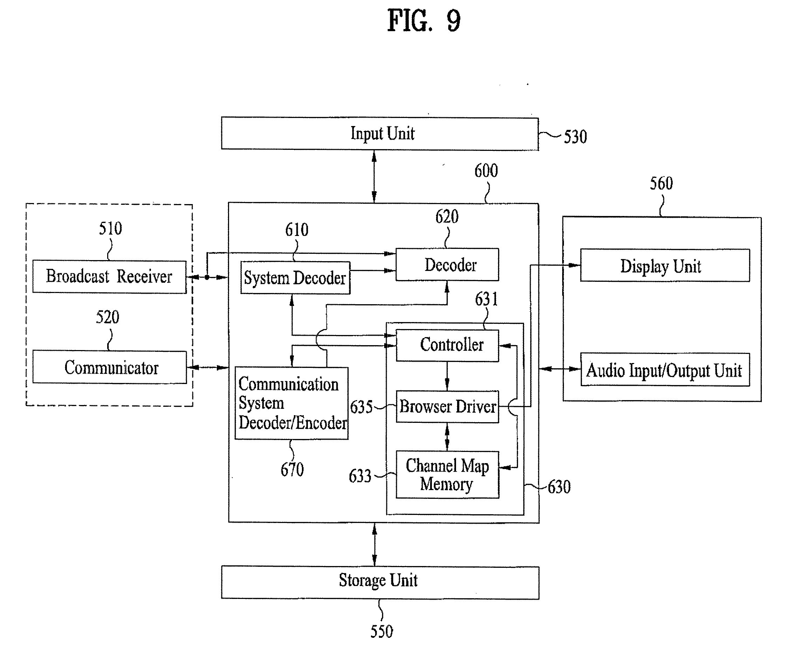

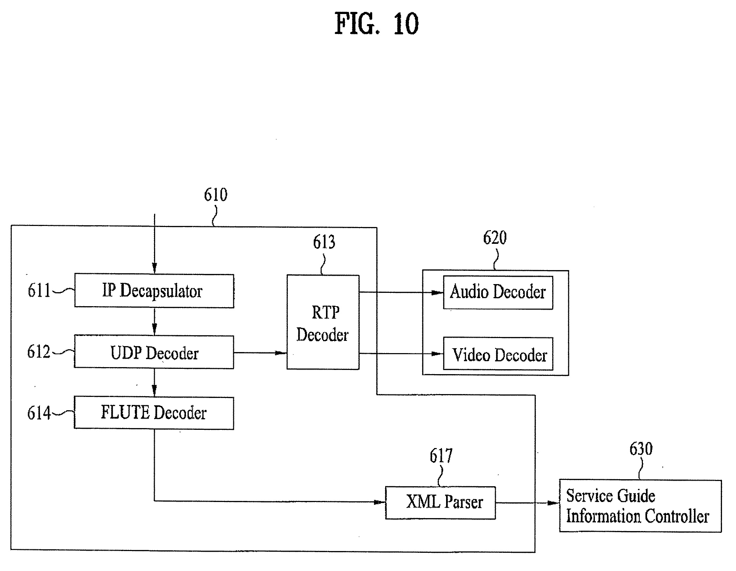

FIG. 9 and FIG. 10 respectively illustrate receiving systems receiving service guide information according to the present invention. Referring to FIG. 9 and FIG. 10, the apparatus for processing service guide information will now be described in detail. The apparatus for processing service guide information includes a receiving unit, an input unit 530, a storage unit 550, a display unit 560, and a control unit 600. The receiving unit may include a broadcast receiver 510 and a communicator 520. The broadcast receiver 510 receives signals through a broadcast channel, and the communicator 520 receives signals through an interactive channel and also transmits signals to the interactive channel. For example, a channel that is in interaction with the communicator 520 may correspond to a wired/wireless channel capable of two-way data communication.

The broadcast receiver 510 receives a broadcast signal, demodulates the received signal, and outputs the demodulated signal to a control unit 600. Herein, the broadcast receiver 510 may include a tuner for selecting a broadcast signal that is received by a DVB-H mode, and a demodulator demodulating the DVB-H type broadcast signal using the OFDM method. The broadcast signal received by the broadcast receiver 510 includes service guide information or a service guide delivery information (SGDD). And the service guide information includes an access fragment having a position, type and format of the content as illustrated in fig. 3 and 4. The access fragment may have access information for a server providing various types of downloadable contents. The access information can be defined as mimeType specified in AccessServerURL of UnicastServiceDelivery element. This access information includes information, and by using the access information, the terminal can access a server (or the location of the server) providing the content of which the format the terminal can support and display. Therefore, the terminal receiving the service guide information can receive a corresponding content from the server (or location of the server), in which an executable content is stored, among the servers storing various types and formats of contents.

The communicator 520 may transmit and receive signals through an interactive channel capable of two-way communication. When receiving a broadcast signal through the interactive channel, the communicator 520 demodulates the received signal based upon the modulation method of the communication system, thereby transmitting the demodulated signal. And, when the communication system decoder/encoder 670 outputs an encoded signal, the communicator 520 modulates the outputted signal based upon the modulation method of the communication system to which the signal is to be transmitted, thereby transmitted the modulated signal. For example, the communicator 520 outputs a signal allowing access to a service, which provides service guide information through an interactive channel based upon a command of the control unit 600. Thereafter, the communicator 520 may receive the service guide information transmitted by the corresponding server.

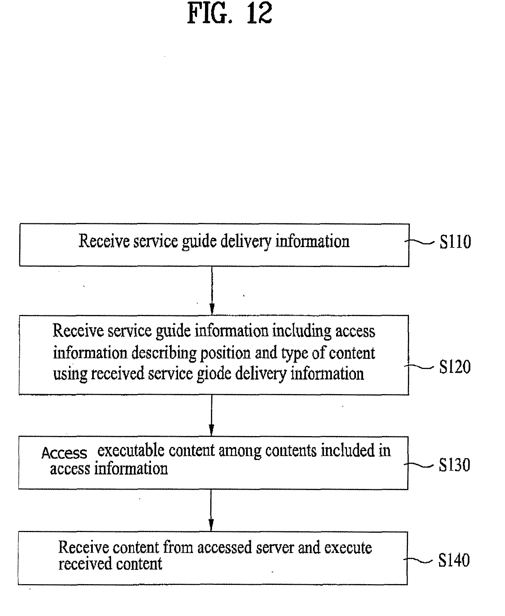

The control unit 600 may include a system decoder 610, a decoder 620, a service guide information controller 630, and a communication system decoder/encoder 670. The control unit 600 controls the operation of the function blocks shown in FIG. 12, such as the receiving unit, the input unit 530, the storage unit 550, and the display unit 560, and also processes control commands received from the user.

When the broadcast receiver receives a signal through the broadcast channel, the system decoder 610 may decode the received signal based upon the coding method of the transmitting/receiving system. When the broadcast receiver 510 demodulates and outputs the broadcast signal, the system decoder 610 decodes the outputted signal, so as to acquire the service guide information. The system decoder 610 may decode the received signal based upon the coding method of the transmitting system. The system decoder 610 can decode the signal received by the receiving unit in accordance with the transmission systems so as to receive the service guide information including access information for a downloadable content as illustrated in figs. 3 and 4. The system decoder 610 will be described in detail with reference to FIG. 10.

The control unit 600 may include the communication system decoder/encoder 670 so that signals may be received and transmitted through the interactive channel. The communication system decoder/encoder 670 may either encode a signal that is to be transmitted through the interactive channel or decode a signal that is received from the communicator 520 through the interactive channel. For example, when the communicator 520 receives a signal including service guide information through the interactive channel, so as to demodulate the received signal and output the demodulated signal, the communication system decoder/encoder 670 may decode the outputted signal and output the service guide information to the service guide information controller 630 or the decoder 620.

The communication system decoder/encoder 670 may encode or decode IP datagram type signals. For example, the communication system decoder/encoder 670 receives a signal demodulated by the communicator 520. Then, the communication system decoder/encoder 670 may either decode the received signal to an IP datagram format and output the decoded signal, or encode the IP datagram format signal, thereby outputting the encoded signal to the communicator 520. More specifically, when the apparatus for processing service guide information receives service guide information through a broadcast channel, the communication system decoder/encoder 670 may encode a signal that allows access to a server, which provides the service guide information including access information for the content illustrated in figs. 3 and 4 through an interactive channel. And the communication system decoder/encoder 670 may decode the service guide information which the communicator 520 receive from the server.

The decoder 620 may decode each of the video data, audio data, and data information decoded by the system decoder 610 and the communication system decoder/encoder 670, respectively. The decoder 620 may include a video decoder, an audio decoder, and a data decoder. For example, the video decoder may decode and output H.264 type video data, and the audio decoder may decode and output AC-3 type and/or AAC+ type audio data. Also, the decoder 620 may also include a data decoder (not shown) that can decode PSI/SI table format program information/service information. For example, the decoder 620 may decode signals based upon table information, such as a program associate table (PAT), a program map table (PMT), and a network information table (NIT), from the signal decoded by the system decoder 610. Alternatively, the decoder 620 may decode a broadcast signal based upon data broadcasting.

The decoder 620 may parse an IP/MAC notification table (INT), which is a table information, from the PMT. The INT includes mapping information between an IP address of an IP stream within the transport stream and a PID of the transport stream. When the decoder 620 parses the INT to acquire service guide entry information, the acquired service guide entry information may be outputted to the service guide information controller 630. Therefore, the apparatus for receiving service guide information may use the entry information to acquire service guide information through the broadcast channel or the interactive channel. At this case, an example of plural pieces of access information for downloadable contents in the service guide information parsed by the decoder 620 was illustrated in fig. 4. For example, the service guide information may include each of access information in which a location of a server providing a content, a content type, and a content format are set.

The service guide information controller 630 receives service guide delivery descriptor decoded by the system decoder 610 or the communication system decoder/encoder 670. Then, the service guide information controller 630 uses the service guide delivery descriptor, so as to enable the apparatus for processing service guide information to receive service guide information. For example, the service guide information controller 630 may control the system decoder 610, so that the system decoder 610 can receive service guide information through the broadcast channel, based upon the service guide delivery descriptor received by the system decoder 610. Alternatively, the service guide information controller 630 may control the communication system decoder/encoder 670, so that the communication system decoder/encoder 670 can receive service guide information through the interactive channel. The process, in which the apparatus for processing service guide information receives the service guide information through an interactive channel or broadcast channel, was described with reference to figs. 3 and 4.

Furthermore, the communicator 520 may modulate a signal through the interactive channel and output the modulated signal, thereby receiving the service guide information from the corresponding server.

The service guide information controller 630 may include a controller 631, a channel map memory 633, and a browser driver 635. The controller 631 extracts channel map information from the service guide information and stores the extracted channel map information in the channel map memory 633. Additionally, the controller 631 controls a session and also controls the browser driver 635, which operates an application, thereby displaying the received or stored service guide information.
The apparatus for processing service guide information may store the received service guide information in the storage unit 550. The storage unit 550 may store service guide information, files transmitted as IP datagrams, and content data. The storage unit 550 may also store data prior to or after being decoded by the decoder 620. The input unit 530 receives a control command inputted by the user and may output the received control command to the control unit 600. The display unit 560 may output the audio or video signal outputted from the control unit 600. Furthermore, an application operated by the service guide information controller 630 may output the service guide information as image and sound through the display unit 560. Therefore, by using the application for the service guide information, the user may download files using the application for the service guide information or may be provided with web services or service guide information.
When the service guide information is acquired from a terminal that can receive DVB-H signals, the following process may be applied. When booting of the terminal is initiated, a list of transmission frequencies within the current network may be obtained from a network information table (NIT) among the multiplexing information included in the broadcast signal. When the terminal tunes a receiving frequency, a stream providing the broadcast service and mapping information of an IP flow may be acquired. The NIT includes identification information of each IP platform. Herein, each IP platform includes information identifying the packet, in which the INT is positioned, from the broadcast stream (in order to do so, reference may be made to PAT and PMT information). The INT provides information on an IP stream in the broadcast stream. Herein, the terminal acquires entry information of the service guide information from the IP stream, thereby obtaining the service guide delivery descriptor (SGDD). When the terminal acquires a service guide delivery descriptor (SGDD), the terminal may acquire information describing the position of each service guide delivery unit, which corresponds to the transmission unit for the respective service guide information. Accordingly, when obtaining the service guide delivery unit, the terminal then receives and displays the service guide information so that the user can view the service guide information. At this time, if the access information defined by mimeType is used, the contents supportable by the terminal or wanted by the user, can be obtained efficiently.

FIG. 10 illustrates a detailed view of the system decoder 610. The system decoder 610 may decode the broadcast signal demodulated by the broadcast receiver 510 based upon the signal coding method. The system decoder 610 may process the service guide information demodulated by the broadcast receiver 510 as described below. The system decoder 610 includes an IP decapsulator 611, a user datagram protocol (UDP) decoder 612, an RTP decoder 613, a file delivery over unidirectional transport protocol (FLUTE) decoder 614, and an XML parser 617.

The system decoder 610 may decode content data, which are being transmitted in real-time, using a decoding method respective of the system coding method. For example, the system decoder 610 may decode content data being transmitted in an IP datagram format and files including service guide information.

An example of the system decoder 610 decoding IP datagram format content data or service guide information will now be described in detail. Firstly, with respect to the content data, the IP decapsulator 611 refers to the header of the IP packet, so as to decapsulate the content data included in a payload of the IP packet. The UDP decoder 612 may decode content data, which are transmitted in real-time from the IP-decapsulated payload, based upon a user datagram protocol (UDP). The RTP decoder 613 may control the coding rate of the content data decoded by the UDP decoder 612 based upon an RTP control protocol (RTCP), so as to decode the decoded content data. The audio/video signal outputted from the RTP decoder 613 is respectively outputted to the decoder 620, which includes the audio decoder and the video decoder.

If the system decoder 610 decodes data on the file format service guide information, the data decoded by the UDP Decoder 612 are outputted to the FLUTE decoder 614. The FLUTE decoder 614 decodes FLUTE format data (IETF RFC3926), thereby outputting files, such as binary data, image data, and text. The data decoded and outputted from the FLUTE decoder 614 may include the service guide information. The XML parser 617 may decode an XML format file, which is outputted from the FLUTE decoder 614. The access fragment of the service guide information may include access information defined as mimeType by which the content can be received.

In case the communication system decoder/encoder 670 decides the received signal and displays the service guide information, the communication system decoder/encoder 670 may decode the service guide information file (*e.g.,* XML file), which is transmitted based upon a protocol, such as HTTP within the IP datagram.

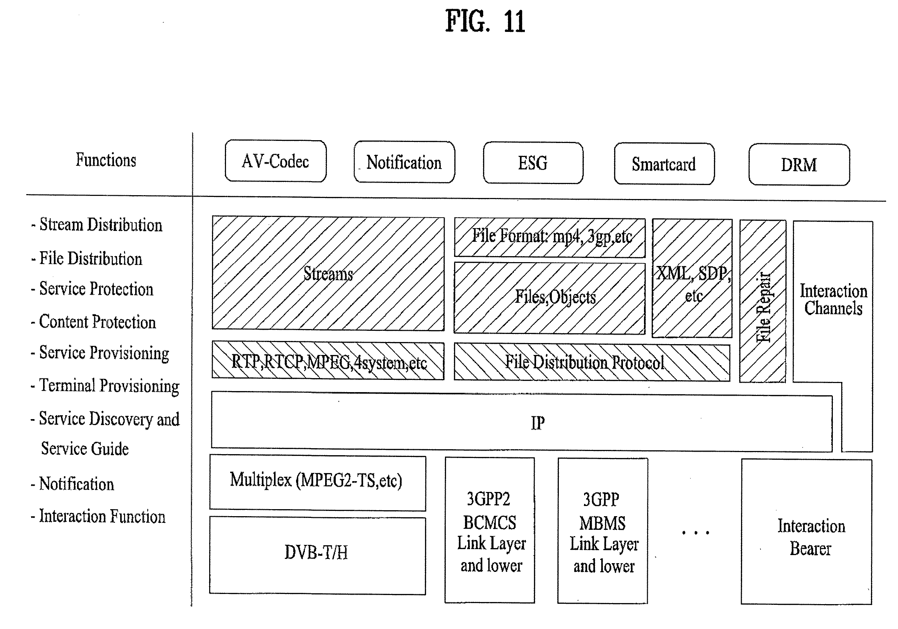

FIG. 11 illustrates an example of a protocol stack based upon which service guide information or service guide delivery descriptor is transmitted. The service guide information or service guide delivery descriptor may be received and transmitted via any bearer. For example, a delivery system may correspond to a digital video broadcasting-handheld/terrestrial (DVB-H/T) system, a 3^{rd} generation partnership project multimedia broadcast multicast service (3GPP MBMS) system, a 3GPP2 broadcast/multicast service (BCMCS) system, an IPTV system, and a DAB/DMB system.

When a file is transmitted through a broadcast channel, the transmission is generally based upon protocols, such as asynchronous layered coding (ALC) or file delivery over unidirectional transport (FLUTE). Alternatively, when the file is transmitted through an interactive channel, the transmission may be based upon protocols, such as HTTP, FLUTE, WAP, and so on. Furthermore, a stream transmission performed through one of a broadcast channel and an interactive channel may be based upon RTP. MPE or MPE-FEC type data or information based upon PSI/SI may be delivered to the stream. A streaming content based upon RTP may be decoded/encoded according to an H.264/AAC+ format. Meanwhile, the service guide information may be transmitted based upon an extensible markup language (XML) and a session description protocol (SDP). The XML corresponds to an object-oriented language. Accordingly, the service guide information may be transmitted by object units.

When the service guide information is transmitted in the DVB-H/T mode, the MPEG-2 TS maybe used as the data link layer. An IP protocol is generally used as the layer corresponding to a network layer. Nevertheless, voice services or text services of a communication system may be transmitted through the interactive channel. Streams, file format data or XML and SDP format data may be received and transmitted. And, by using the protocol shown in FIG. 11, the terminal may operate applications associated with audio/video data, service guide information, content protection, and so on.

FIG. 12 illustrates a method for processing service guide information according to an embodiment of the present invention. The method for processing service guide information according to the present invention will now be described in detail with reference to FIG. 12. As described above, the service guide information may also be delivered by a bearer. A service guide delivery information (*e.g.,* SGDD) is received (S110). In the description of the present invention, the DVB-H system has been proposed as the example of receiving entry information of the service guide information.

By using the received service guide delivery information, service guide information including access information, which describes the position, type, and format of each downloadable content, is received (S120). The service guide delivery information may correspond to entry information for receiving the service guide information. The service guide information may include position information on a server, which provides downloadable contents in diverse formats, and access information describing the type and format of the contents stored in the corresponding server. For example, the access information may be defined by a mimeType. The respective example of the service guide information is described in FIG. 3 and FIG. 4.

Subsequently, among the contents included in the access information, the executable contents are accessed (S130). Among the diverse access information, by using the access information on the server, which provides the executable contents, the server may be accessed to the corresponding position. Since the access information includes position information providing contents having various formats, the apparatus for processing service guide information may access the content corresponding to the position information, wherein the executable content is included.

Finally, the corresponding content is received from the accessed server and executed (S140). The user may acquire the access information from the Access fragment of the service guide information. Then, the user may receive only the contents corresponding to the desired format based upon the acquired access information. Herein, the term "execution (of the content)" also includes the meaning of "simple storage (of the content)". Therefore, prior to downloading the content, the terminal may be able to recognize in advance whether the content that is to be received is a displayable content or an executable content. Accordingly, since the terminal downloads only the displayable contents, excessive usage of resource and time may be reduced.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.
Further embodiments of the invention are described in the following numbered paragraphs:
1. A method for processing service guide information, comprising:
   receiving (S110) service guide delivery information;
   receiving (S120) service guide information including access information, wherein the access information describes a position and type of a content, by using the received service guide delivery information;
   accessing (S130) an executable content among a plurality of contents included in the access information; and
   receiving (S140) the content from an accessed server.
2. The method of paragraph 1, wherein the access information includes a content format defined by a mimeType.
3. The method of paragraphs 1 or 2, wherein the access information is included in an element providing link information, the element belonging to an access fragment of the service guide information, and wherein the link information enables access to a content that is received through an interactive channel.
4. An apparatus for processing service guide information, comprising:
   a receiving unit (510, 520) configured to receive service guide information, the service guide information including access information describing a position and type of downloadable content, and receive an executable content among a plurality of contents included in the access information;
   a control unit (600) configured to receive the service guide information, control the processing apparatus to receive the executable content using the access information, and decode the received content; and
   a display unit (640) configured to display the content decoded by the control unit.
5. The apparatus of paragraph 4, wherein the access information includes a content format defined by a mimeType.
6. The apparatus of paragraphs 4 or 5, wherein the access information is included in an element providing link information, the element belonging to an access fragment of the service guide information, and wherein the link information enables access to a content that is received through an interactive channel.
7. The apparatus of paragraph 4, wherein the control unit (600) comprises:
   an internet protocol (IP) decapsulator (611) configured to decapsulate an IP datagram delivering the service guide information including the access information;
   a user datagram protocol (UDP) decoder (612) configured to decode the decapsulated data based upon the UDP;
   a file delivery over unidirectional transport protocol (FLUTE) decoder (614) configured to decode the UDP-decoded data based upon the FLUTE; and
   a parser (617) configured to parse the FLUTE-decoded data.

## Claims

1. A method for transmitting service guide information, the method comprising:
transmitting service guide delivery information for obtaining service guide information by a receiver (510);
transmitting the service guide information according to the service guide delivery information, wherein an element belonging to an access fragment of the service guide information includes access information to receive at least one of contents through an interactive channel by the receiver (510), wherein the access information includes link information and a mimeType, wherein the link information provides position information of a server or contents, and wherein the mimeType includes type information and format information of executable contents; and
transmitting executable contents through the interactive channel.

2. The method of claim 1, wherein the type information indicates whether a type of the executable contents is one of video type, image type and text type and wherein the format information indicates whether a format of the executable contents is one of an mpeg format, a gif format and an xml format, in accordance with the type information.

3. The method of claim 1, wherein the method further includes:
encoding broadcast data and the service guide information.

4. An apparatus for transmitting service guide information, the apparatus comprising:
an encoder (320) to encode service guide information;
a transmitter to transmit service guide delivery information for obtaining the service guide information by a receiver (510) and the encoded service guide information according to the service guide delivery information, wherein an element belonging to an access fragment of the service guide information includes access information to receive at least one of contents through an interactive channel by the receiver (510), wherein the access information includes link information and a mimeType, wherein the link information provides position information of a server or contents, and wherein the mimeType includes type information and format information of executable contents and transmit executable contents through the interactive channel.

5. The apparatus of claim 4, wherein the type information indicates whether a type of the executable contents is one of video type, image type and text type and wherein the format information indicates whether a format of the executable contents is one of an mpeg format, a gif format and an xml format, in accordance with the type information.

6. The apparatus of claim 4, wherein the encoder (320) further encodes broadcast data.

## Patentansprüche

1. Verfahren zum Übertragen von Diensteführer-Informationen, wobei das Verfahren umfasst:
Übertragen von Diensteführer-Lieferinformationen zwecks eines Erhaltens von Diensteführer- Informationen durch einen Empfänger (510);
Übertragen der Diensteführer-Informationen gemäß den Diensteführer-Lieferinformationen, wobei ein Element, das zu einem Zugangsfragment der Diensteführer-Informationen gehört, Zugangsinformationen zum Empfangen wenigstens eines Inhalts über einen interaktiven Kanal durch den Empfänger (510) beinhaltet, wobei die Zugangsinformationen Link-Informationen und einen mimeType beinhalten, wobei die Link-Informationen Positionsinformationen eines Servers oder von Inhalten bereitstellen und wobei der mimeType Typ-Informationen und Format-Informationen ausführbarer Inhalte beinhaltet; und
Übertragen ausführbarer Inhalte über den interaktiven Kanal.

2. Verfahren nach Anspruch 1, wobei die Typ-Informationen angeben, ob ein Typ der ausführbaren Inhalte einer des Video-Typs, Bild-Typs und Text-Typs ist, und wobei die Format-Informationen angeben, ob ein Format der ausführbaren Inhalte, je nach den Typ-Informationen, eines eines mpeg-Formats, eines gif-Formats und eines xml-Formats ist.

3. Verfahren nach Anspruch 1, wobei das Verfahren weiterhin beinhaltet:
Codieren von Rundfunkdaten und der Diensteführer-Informationen.

4. Vorrichtung zum Übertragen von Diensteführer-Informationen, wobei die Vorrichtung umfasst:
einen Kodierer (320) zum Codieren von Diensteführer-Informationen;
einen Sender zum Übertragen von Diensteführer-Lieferinformationen zwecks eines Erhaltens der Diensteführer-Informationen durch einen Empfänger (510) und der codierten Diensteführer-Informationen gemäß den Diensteführer-Lieferinformationen, wobei ein Element, das zu einem Zugangsfragment der Diensteführer-Informationen gehört, Zugangsinformationen zum Empfangen wenigstens eines Inhalts über einen interaktiven Kanal durch den Empfänger (510) beinhaltet, wobei die Zugangsinformationen Link-Informationen und einen mimeType beinhalten, wobei die Link-Informationen Positionsinformationen eines Servers oder von Inhalten bereitstellen und wobei der mimeType Typ-Informationen und Format-Informationen ausführbarer Inhalte beinhaltet, und Übertragen ausführbarer Inhalte über den interaktiven Kanal.

5. Vorrichtung nach Anspruch 4, wobei die Typ-Informationen angeben, ob ein Typ der ausführbaren Inhalte einer des Video-Typs, Bild-Typs und Text-Typs ist, und wobei die Format-Informationen angeben, ob ein Format der ausführbaren Inhalte, je nach den Typ-Informationen, eines eines mpeg-Formats, eines gif-Formats und eines xml-Formats ist.

6. Vorrichtung nach Anspruch 4, wobei der Kodierer (320) weiterhin Rundfunkdaten codiert.

## Revendications

1. Procédé de transmission d'informations de guide de service, le procédé comprenant :
la transmission d'informations de distribution de guide de service pour obtenir des informations du guide de service par un récepteur (510) ;
la transmission des informations de guide de service selon les informations de distribution du guide de service, dans lequel un élément appartenant à un fragment d'accès des informations du guide de service comporte des informations d'accès pour recevoir au moins un de contenus à travers un canal interactif par le récepteur (510),
dans lequel les informations d'accès comportant des informations de lien et un mimeType, dans lequel les informations de lien fournissent des informations de position d'un serveur ou des contenus et dans lequel le mimeType comporte des informations de type et des informations de format de contenus exécutables ; et la transmission de contenus exécutables à travers le canal interactif.

2. Procédé selon la revendication 1, dans lequel les informations de type indiquent si un type des contenus exécutables est l'un parmi un type vidéo, un type d'image et un type de texte et dans lequel les informations de format indiquent si un format des contenus exécutables est l'un parmi un format mpeg, un format gif et un format xml, selon les informations de type.

3. Procédé selon la revendication 1, dans lequel le procédé comporte en outre :
le codage de données diffusées et les informations de guide de service.

4. Appareil de transmission d'informations de guide de service, l'appareil comprenant :
un codeur (320) pour coder des informations de guide de service ;
un émetteur pour transmettre des informations de distribution de guide de service pour obtenir les informations de guide de service par un récepteur (510) et les informations de guide de service codées selon les informations de distribution de guide de service, dans lequel un élément appartenant à un fragment d'accès des informations de guide de service comporte des informations d'accès pour recevoir au moins un des contenus à travers un canal interactif par le récepteur (510), dans lequel les informations d'accès comportent des informations de lien et un mimeType, dans lequel les informations de lien fournissent des informations de position d'un serveur ou de contenus et dans lequel le mimeType comporte des informations de type et des informations de format de contenus exécutables et transmet des contenus exécutables à travers le canal interactif.

5. Appareil selon la revendication 4, dans lequel les informations de type indiquent si un type des contenus exécutables est l'un parmi un type vidéo, un type d'image et un type de texte et dans lequel les informations de format indiquent si un format des contenus exécutables est l'un parmi un format mpeg, un format gif et un format xml, selon les informations de type.

6. Appareil selon la revendication 4, dans lequel le codeur (320) code en outre des données diffusées.
